# EUROPEAN PATENT APPLICATION

(11) **EP 3 670 864 A1**
(43) Date of publication of application: **24.06.2020**
(21) Application number: 19209727.7
(22) Date of filing: 18.11.2019
(51) Int. Cl.: F02C 7/06, F01D 9/06, F02C 7/22

(54) **CONNECTOR SYSTEM**

(30) Priority: 17.12.2018 GB 201820505
(71) Applicant: Rolls-Royce plc, London N1 9FX (GB)
(72) Inventor: Elliott, Michael, Derby, Derbyshire DE24 8BJ (GB)
(74) Representative: Rolls-Royce plc

(57) **Abstract**

A connector system for a gas turbine engine having an engine core and a fan located upstream of the engine core and configured to provide a bypass airflow around the engine core, wherein the connector system comprises: an engine core mount block, configured to be mounted to the surface of the engine core and comprising a plurality of fluid conduits passing through the engine core mount block; and a rigid conduit configured to be supported by connection of a first end of the rigid conduit to the engine core mount block and/or by connection of a second end to a connection point in the gas turbine engine arranged radially outward of the bypass airflow; wherein the rigid conduit comprises a plurality of fluid conduits extending from the first end to the second end of the rigid conduit; and when the first end of the rigid conduit is connected to the engine core mount block, each of the fluid conduits in the engine core mount block is in fluid communication a respective fluid conduit in the rigid conduit.

## Description

### Field of the disclosure

The present disclosure relates to a connector system for a gas turbine engine

### Background of the disclosure

The present disclosure relates to the provision of services to the engine core of a gas turbine engine having an engine core and a fan located upstream of the engine core that provides a bypass airflow around the engine core. Such services may include fluid conduits that must traverse the bypass airflow. It may be desirable, therefore, to minimise the disruption of the bypass airflow caused by the connection of the services between the engine core and component radially outward of the bypass airflow. It may also be desirable to minimise the time taken to provide the connection during assembly and/or maintenance of the gas turbine engine.

### Summary of the disclosure

According to a first aspect there is provided a connector system for a gas turbine engine having an engine core and a fan located upstream of the engine core and configured to provide a bypass airflow around the engine core, wherein the connector system comprises an engine core mount block, configured to be mounted to the surface of the engine core and comprising a plurality of fluid conduits passing through the engine core mount block; and a rigid conduit configured to be supported by connection of a first end of the rigid conduit to the engine core mount block and/or by connection of a second end to a connection point in the gas turbine engine arranged radially outward of the bypass airflow; wherein the rigid conduit comprises a plurality of fluid conduits extending from the first end to the second end of the rigid conduit; and when the first end of the rigid conduit is connected to the engine core mount block, each of the fluid conduits in the engine core mount block is in fluid communication with a respective fluid conduit in the rigid conduit.

At least one of the rigid conduits and the engine core mount block may be an integrally formed single-piece component.

In an arrangement, the connector system may comprise two rigid conduits, each configured to be connected to respective parts of the engine core mount block such that the plurality of fluid conduits in each rigid conduit is in fluid communication with a respective plurality of fluid conduits in the engine core mount block.

In an arrangement the engine core mount block and the first end of the rigid conduit may each comprise a respective connection surface each comprising a plurality of openings in fluid communication with a respective fluid conduit in the engine core mount block or fluid conduit; and the connection surfaces may be configured such that, when the rigid conduit is connected to the engine core mount block, each opening in the connection surface of the rigid conduit is aligned with an opening in the connection surface of the engine core mount block, providing a fluid-tight connection between the corresponding fluid conduits in the rigid conduit and in the engine core mount block.

A connector system may further comprise a mechanical connection, configured to secure the rigid conduit to the engine core mount block in predetermined respective positions such that the openings in the connection surfaces are aligned.

In an arrangement the fluid conduits in the engine core mount block may extend between an opening in a connection surface at which the fluid conduits are connected to the respective fluid conduits in the rigid conduit and an opening in a mounting surface at which the engine core mount block is mounted to the engine core; and the separation between openings in the mounting surface may be greater than the separation between openings in the connection surface.

In an arrangement the fluid conduits in the engine core mount block may extend between an opening in a connection surface at which the fluid conduits are connected to the respective fluid conduits in the rigid conduit and an opening in a mounting surface at which the engine core mount block is mounted to the engine core; and each of the respective openings in the mounting surface of the engine core mount block may comprise a respective fluid conduit connector, configured to provide a fluid connection between a fluid conduit within the engine core and a fluid conduit within the engine core mount block.

In an arrangement the second end of the rigid conduit has a connection surface configured to engage with a corresponding connection surface provided on the connection point arranged radially outward of the bypass airflow; wherein the connection surface at the second end of the rigid conduit comprises a plurality of openings, each in fluid communication with a fluid conduit in the rigid conduit; and the connection surface at the second end of the rigid conduit is configured such that, when the rigid conduit is connected to the connection point arranged radially outward of the bypass airflow, each of the openings in the second end of the rigid conduit is aligned with a corresponding opening in the connection surface of the connection point, providing a fluid-tight connection between the fluid conduits in the rigid conduit and the corresponding openings in the connection point.

In an arrangement, the connector system may further comprise a mechanical connection, configured to secure the rigid conduit to the connection point arranged radially outward of the bypass airflow in predetermined respective positions such that the openings in the connection surfaces are aligned.

In an arrangement, the connector system may further comprise at least one connector for provision of additional services other than fluid conduits between the engine core and one or more components arranged radially outward of the bypass airflow; wherein at least one connector for provision of additional services is mounted to and supported by the rigid conduit.

In an arrangement, the connector system may further comprise at least one connector for provision of additional services other than fluid conduits between the engine core and one or more components arranged radially outward of the bypass airflow; wherein at least one connector for provision of additional services is integrally provided within the rigid conduit.

According to a second aspect there is provided a gas turbine engine for an aircraft, the gas turbine engine comprising: an engine core comprising a turbine, a compressor, and a core shaft connecting the turbine to the compressor; a fan located upstream of the engine core, the fan comprising a plurality of fan blades; a gearbox that receives an input from the core shaft and outputs drive to the fan so as to drive the fan at a lower rotational speed than the core shaft; and a connector system as described above.

In an arrangement, the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 °C (ambient pressure 101.3kPa, temperature 30 °C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** schematically depicts a connector system;
**Figures 5, 6 and 7** depict an upper perspective view, side view, and lower perspective view, respectively, of an engine core mount block for use in a connector system such as that depicted in Figure 4; and
**Figures 8 and 9** depict elevations of an example of a rigid conduit that may be used in a connector system such as that depicted in Figure 4.

### Detailed description

Aspects and embodiments of the present disclosure will now be discussed with reference to the accompanying figures. Further aspects and embodiments will be apparent to those skilled in the art.

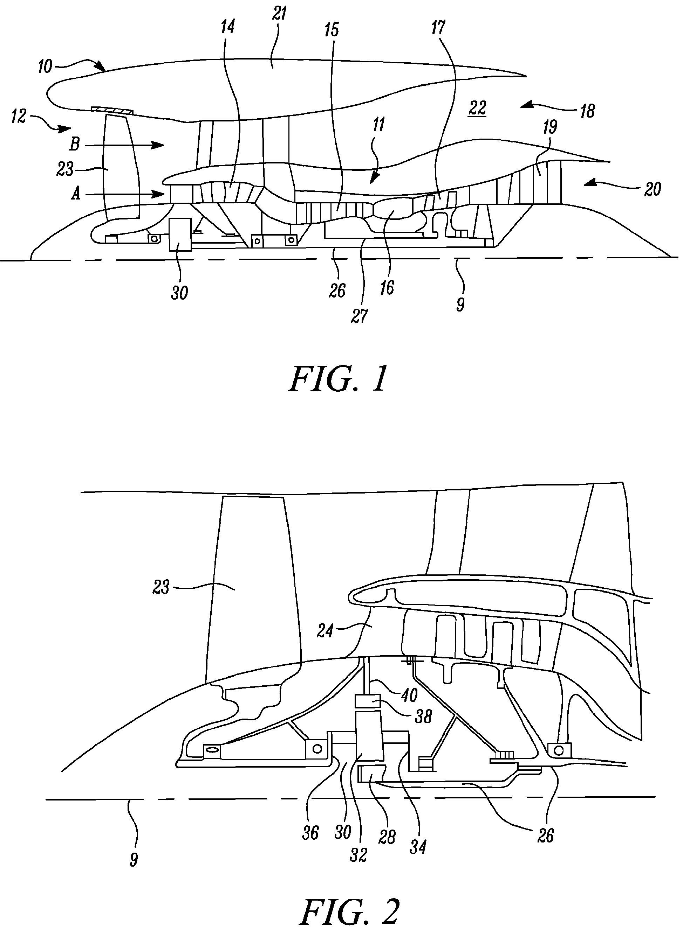

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

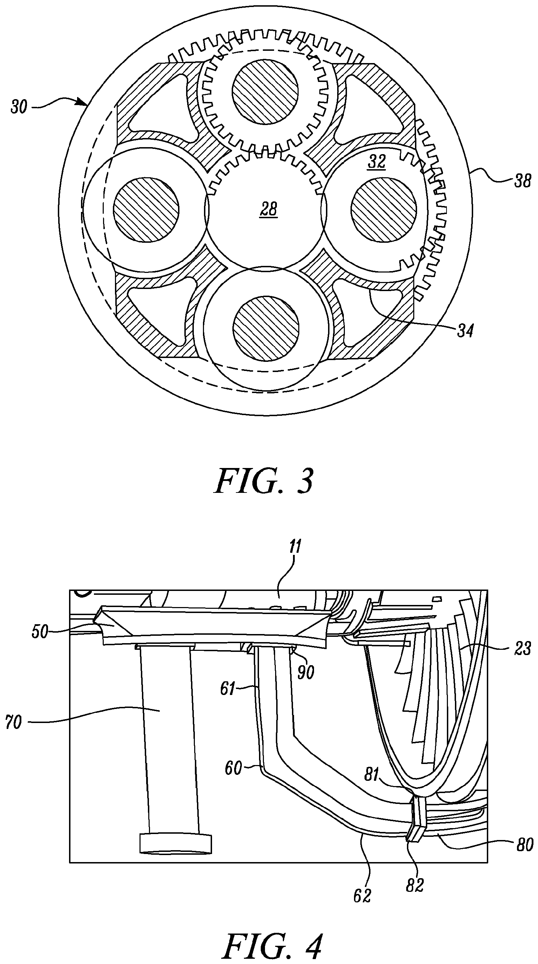

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in **Figure 3****.** There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the engine core nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

**Figure 4** depicts an arrangement of a connector system configured to provide services between the engine core 11 and the remainder of the gas turbine engine, such as components arranged radially outward of the bypass airflow B (as shown in Figure 1), and/or components external to the gas turbine engine. Such services may include, but are not limited to, oil and/or fuel supplied to or returned from the engine core 11 and other fluid conduits, such as those provided for tell-tale dry drains. Tell-tale dry drains may provide a return of fluids such as oil from the engine core 11 in the event of a leak or other fault. They may therefore be used to provide an indication of an engine fault.

As shown, the connector system includes an engine core mount block 50, configured to be mounted to the engine core 11 and at least one rigid conduit 60 that is a single component containing a plurality of fluid conduits. The rigid conduit 60 extends between a first end 61 connected to the engine core mount block 50 and a second end 62 connected to a connection point 80 provided radially outward of the bypass airflow B, for example within the nacelle 21.

The rigid conduit 60 is self-supporting in that it may be supported only by its connection to the engine core mount block 50 and/or its connection to the connection point 80 provided radially outward of the bypass airflow B.

Such an arrangement, in which a single self-supporting component contains plural discrete fluid conduits, may have fewer components than an arrangement in which plural separate fluid conduits are individually provided between the engine core 11 and components provided radially outward of the bypass airflow B and that may also each require structural support. Accordingly, the time taken to assemble and/or disassemble the connection of services between the engine core 11 and the remainder of a gas turbine engine 10 may be significantly reduced. Furthermore, in such an arrangement, the separation between individual fluid conduits may be reduced in comparison with an arrangement in which separate fluid conduits are provided. This may result in a reduction in the interruption of the bypass airflow B, in turn resulting in an improvement in the gas turbine engine efficiency.

In an arrangement, one or both of the engine core mount block 50 and the rigid conduit 60 may be an integrally formed single-piece component. Such a component may be formed from composite materials, for example, providing an ability to form the potentially complex shapes required and also providing the required strength. Alternatively or additionally, at least one of the engine core mount block 50 and the rigid conduit 60 may be cast, for example using a lost wax process and/or may formed using an additive manufacturing process, which may for example, enable the component to be formed from a material such as aluminium. Alternatively or additionally, at least one of the engine core mount block 50 and the rigid conduit 60 may be formed by initially forming individual sections, for example corresponding to individual fluid conduits, and then joining the individual sections together, for example by welding.

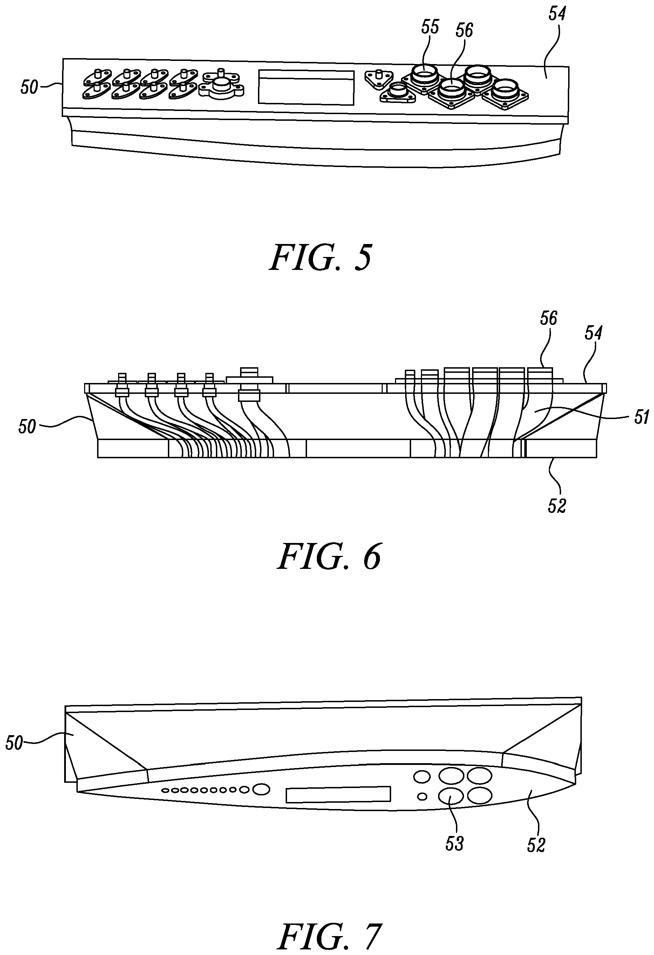

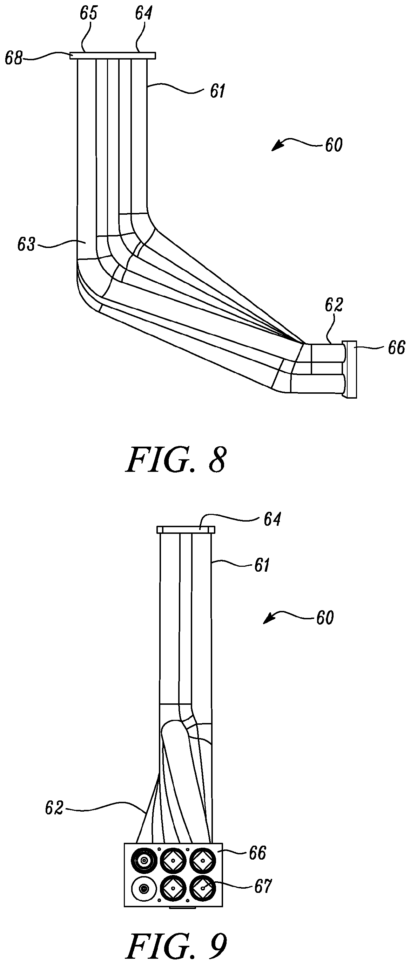

**Figures 5 to 9****,** respectively, depict in more detail examples of an engine core mount block 50 and a rigid conduit 60 that may be used to form a connector system as depicted in Figure 4.

As shown in Figure 4, in an optional arrangement, the connector system may include two or more rigid conduits 60, 70, each connected to the engine core mount block 50 and each comprising a plurality of fluid conduits that connect to corresponding fluid conduits in the engine core mount block 50 in the manner discussed below. In an arrangement, two rigid conduits 60, 70 may be provided that each perform a different function. For example, one rigid conduit 60 may be provided primarily to supply fluids to, and remove fluids from, the engine core 11. Such fluids may be oil and/or fuel. The second rigid conduit 70 may primarily be provided to include fluid conduits that are provided for tell-tale dry drains. The description below is based on the example of a rigid conduit 60 of the first kind. However, the arrangement of both may be similar.

As discussed, the first end 61 of the rigid conduit 60 is connected to the engine core mount block 50. The connection may be configured such that a connection surface 64 of the rigid conduit 60 engages with a corresponding connection surface 52 of the engine core mount block 50. A plurality of openings 53 may be provided in the connection surface 52 of the engine core mount block 50 that are in fluid communication with fluid conduits 51 that pass through the engine core mount block 50. Similarly, openings 65 may be provided in the connection surface 64 of the rigid conduit 60 that are in fluid communication with respective fluid conduits 63 passing through the rigid conduit 60.

By arranging the layout of the openings 53 in the connection surface 52 of the engine core mount block 50 to correspond to the layout of the openings 65 in the connection surface 64 of the rigid conduit 60, when the rigid conduit 60 is correctly connected to the engine core mount block 50, each of the openings 65 in the connection surface 64 of the rigid conduit 60 may be aligned with a respective opening 53 in the connection surface 52 of the engine core mount block 50. In such an arrangement, by connecting the single-component rigid conduit 60 to the engine core mount block 50, a plurality of fluid conduits 63 in the rigid conduit 60 may be connected, with a fluid-tight connection, to a corresponding plurality of fluid conduits 51 within the engine core mount block. In such an arrangement, each individual fluid conduit need not be separately connected.

In an arrangement, the engine core mount block 50 may be formed from a plate that is mounted to the engine core 11 and supports the rigid conduit 60. In such an arrangement, the fluid conduits through the engine core mount block may be openings through the plate.

In an arrangement, a mechanical connection 90 may be provided to securely connect the rigid conduit 60 to the engine core mount block 50 in a required position such that the openings 53, 65 are correctly aligned. For example, a flange 68 at the first end 61 of the rigid conduit may be bolted to the engine core mount block 50. Other suitable mechanical connections may also be used. In an arrangement a gasket may be provided between the rigid conduit 60 and the engine core mount block 50, for example in order to improve the seal at the connection of respective fluid conduits 63, 51 in the rigid conduit 60 and the engine core mount block 50.

The engine core mount block 50 is configured to be mounted to the engine core 11 such that it may also structurally support the rigid conduit 60, 70. Additionally, it functions as an interface between the fluid conduits in the rigid conduits 60, 70 and fluid conduits within the engine core 11. The engine core mount block 50 therefore includes a plurality of fluid conduits 51 passing through the engine core mount block 50. As discussed above, one end of each of the fluid conduits 51 connects to an opening 53 in the connection surface 52 of the engine core mount block 50. The opposite end of each of the fluid conduits 51 connects to an opening 55 in a mounting surface 54 at which the engine core mount block 50 is mounted to the engine core 11. By connecting fluid conduits within the engine core 11 to each of these openings 55 in the mounting surface 54, the fluid conduits within the engine core 11 may be connected to corresponding fluid conduits 63 within the rigid conduit 60 by way of a corresponding fluid conduit 51 through the engine core mount block 50.

At each of the fluid conduit openings 55 in the mounting surface 54 of the engine core mount block 50, conventional fluid conduit connectors 56 may be provided to enable connection of the fluid conduits within the engine core 11 to the fluid conduits 51 within the engine core mount block 50. For example, the fluid conduit connectors 56 provided on the engine core mount block 50 may be configured to have fluid conduits within the engine core 11 connected to them by bolted flanges. Other suitable fluid conduit connectors may also be used.

In an arrangement, the engine core mount block 50 may be configured such that the density of openings 53 in the connection surface 52 used to connect the fluid conduits 51 in the engine core mount block 50 to the fluid conduits 63 in the rigid conduit 60, is greater than the density of openings 55 in the mounting surface 54 of the engine core mount block 50. In other words, the separation between openings 55 in the mounting surface 54 may be greater than the separation between the openings 53 in the connection surface 52. Such an arrangement may on the one hand facilitate connection of individual fluid conduit connectors 56 to individual fluid conduits within the engine core 11, while on the other hand ensuring that the fluid conduits 63 within the rigid conduit 60 are as close together as possible. Such an arrangement may minimise the cross-sectional area of the rigid conduit 61, thereby minimising the disruption of the bypass airflow B, in turn improving the efficiency of the gas turbine engine.

The engine core mount block 50 may be formed from a fireproof material and/or also function as the fire boundary between the engine core zone and the fan zone, namely the bypass airflow B. In an arrangement, the engine core mount block may provide a seal land for engagement with a part of a thrust reverser unit (sometimes known as a TRU).

As discussed above, the second end 62 of the rigid conduit 60 is configured to be connected to a connection point 80 provided radially outward of the bypass airflow B. In an arrangement, the connection between the second end 62 of the rigid conduit 60 and the connection point 80 may be similar to the arrangement discussed above for connecting the first end 61 of the rigid conduit 60 to the engine core mount block 50. For example, the second end 62 of the rigid conduit 60 and the connection point 80 may have corresponding connection surfaces 66, 81. The connection surface 66 at the second end 62 of the rigid conduit 60 may have a plurality of openings 67, each in fluid communication with a fluid conduit 63 within the rigid conduit 60. The connection surface (81) provided on the connection point 80 may have a corresponding set of openings arranged such that, when the connection surfaces 66, 81 are correctly positioned, the openings are aligned, providing a fluid-tight connection between the fluid conduits 63 in the rigid conduit 61 and corresponding fluid conduits in the connection point 80. The fluid conduits in the connection point 80 may in turn be connected to other components positioned outside the engine core 11. A mechanical connection, such as bolted flanges, may be provided to secure the rigid conduit 60 to the connection point 80, ensuring that the openings in the connection surfaces 66, 81 are correctly aligned. This mechanical connection 82 may also provide structural support for the rigid conduit 61, as discussed above.

It should be appreciated that, although in the Figures the openings for the fluid conduits are shown as circular, this is not essential. Likewise, the cross-section of the conduits themselves may not be circular. Furthermore, although the cross-section of fluid conduits through the various components may be constant and/or may match the cross-section of corresponding openings, this is not essential.

In an arrangement, additional services other than fluid conduits may be provided between the engine core 11 and components not included within the engine core 11 namely arranged radially outward of the bypass airflow. Such additional services may, for example, include control signals, mechanical linkages such as a Bowden cable and/or electrical power. At least one connector for provision of such additional services between the engine core 11 and other components, such as a wiring loom, may be mounted to and supported by the rigid conduit 60. For example, the rigid conduit 60 may include a mounting point to which such a connector may be mounted.

In an arrangement, at least one such connector for provision of additional services between the engine core and another component may be integrally provided within the rigid conduit 60. In such an arrangement, an interface for the connector for the additional service may be integrated with one or more of the connection surfaces 64, 66 provided on the rigid conduit 60 such that connection of the rigid conduit 60 to the engine core mount block 50 and/or connection point 80 provides a connection for the additional service at the same time as connecting the fluid conduits 63.

It will be understood that the invention is not limited to the embodiments above-described and various modifications and improvements can be made without departing from the concepts described herein but within the scope of the following claims. Except where mutually exclusive, any of the features may be employed separately or in combination with any other features and the disclosure extends to and includes all combinations and sub-combinations of one or more features described herein.

## Claims

1. A connector system for a gas turbine engine (10) having an engine core (11) and a fan (23) located upstream of the engine core and configured to provide a bypass airflow (B) around the engine core, wherein the connector system comprises:
an engine core mount block (50), configured to be mounted to the surface of the engine core (11) and comprising a plurality of fluid conduits (51) passing through the engine core mount block; and
a rigid conduit (60) configured to be supported by connection of a first end (61) of the rigid conduit to the engine core mount block (50) and/or by connection of a second end (62) to a connection point (80) in the gas turbine engine (10) arranged radially outward of the bypass airflow (B);
wherein the rigid conduit (60) comprises a plurality of fluid conduits (63) extending from the first end (61) to the second end (62) of the rigid conduit; and
when the first end (61) of the rigid conduit (60) is connected to the engine core mount block (50), each of the fluid conduits (51) in the engine core mount block is in fluid communication with a respective fluid conduit (63) in the rigid conduit.

2. The connector system according to claim 1, wherein at least one of the rigid conduits (60) and the engine core mount block (50) is an integrally formed single-piece component.

3. The connector system according to claim 1 or 2, comprising two rigid conduits (60, 70), each configured to be connected to respective parts of the engine core mount block (50) such that the plurality of fluid conduits (63) in each rigid conduit is in fluid communication with a respective plurality of fluid conduits (51) in the engine core mount block.

4. The connector system according to any one of the preceding claims, wherein the engine core mount block (50) and the first end (61) of the rigid conduit (60) each comprise a respective connection surface (52, 64) each comprising a plurality of openings (53, 65) in fluid communication with a respective fluid conduit (51, 63) in the engine core mount block or fluid conduit; and
the connection surfaces (52, 64) are configured such that, when the rigid conduit (60) is connected to the engine core mount block (50), each opening (65) in the connection surface (64) of the rigid conduit is aligned with an opening (53) in the connection surface (52) of the engine core mount block, providing a fluid-tight connection between the corresponding fluid conduits in the rigid conduit and in the engine core mount block.

5. The connector system according to claim 4 , further comprising a mechanical connection (90), configured to secure the rigid conduit (60) to the engine core mount block (50) in predetermined respective positions such that the openings (53, 65) in the connection surfaces (52, 64) are aligned.

6. The connector system according to any preceding claim, wherein the fluid conduits (51) in the engine core mount block (50) extend between an opening (53) in a connection surface (52) at which the fluid conduits are connected to the respective fluid conduits (63) in the rigid conduit (60) and an opening (55) in a mounting surface (54) at which the engine core mount block is mounted to the engine core (11); and
the separation between openings (55) in the mounting surface (54) is greater than the separation between openings (53) in the connection surface (52).

7. The connector system according to any preceding claim, wherein the fluid conduits (51) in the engine core mount block (50) extend between an opening (53) in a connection surface (52) at which the fluid conduits are connected to the respective fluid conduits (63) in the rigid conduit (60) and an opening (55) in a mounting surface (54) at which the engine core mount block is mounted to the engine core (11); and
each of the respective openings (55) in the mounting surface (54) of the engine core mount block (50) comprises a respective fluid conduit connector (56), configured to provide a fluid connection between a fluid conduit within the engine core (11) and a fluid conduit (51) within the engine core mount block (50).

8. The connector system according to any preceding claim, wherein the second end (62) of the rigid conduit (60) has a connection surface (66) configured to engage with a corresponding connection surface (81) provided on the connection point (80) arranged radially outward of the bypass airflow (B);
wherein the connection surface (66) at the second end (62) of the rigid conduit (60) comprises a plurality of openings (67), each in fluid communication with a fluid conduit (63) in the rigid conduit; and
the connection surface (66) at the second end (62) of the rigid conduit (60) is configured such that, when the rigid conduit is connected to the connection point (80) arranged radially outward of the bypass airflow (B), each of the openings (67) in the second end of the rigid conduit is aligned with a corresponding opening in the connection surface (81) of the connection point (80), providing a fluid-tight connection between the fluid conduits (63) in the rigid conduit and the corresponding openings in the connection point.

9. The connector system according to claim 8, further comprising a mechanical connection (82), configured to secure the rigid conduit (60) to the connection point (80) arranged radially outward of the bypass airflow (B) in predetermined respective positions such that the openings in the connection surfaces (66, 81) are aligned.

10. The connector system according to any preceding claim, further comprising at least one connector for provision of additional services other than fluid conduits between the engine core (11) and one or more components arranged radially outward of the bypass airflow;
wherein at least one connector for provision of additional services is mounted to and supported by the rigid conduit (60).

11. The connector system according to any preceding claim, further comprising at least one connector for provision of additional services other than fluid conduits between the engine core (11) and one or more components arranged radially outward of the bypass airflow;
wherein at least one connector for provision of additional services is integrally provided within the rigid conduit (60).

12. A gas turbine engine (10) for an aircraft, the gas turbine engine comprising:
an engine core (11) comprising a turbine (19), a compressor (14), and a core shaft (26) connecting the turbine to the compressor;
a fan (23) located upstream of the engine core, the fan comprising a plurality of fan blades;
a gearbox (30) that receives an input from the core shaft (26) and outputs drive to the fan so as to drive the fan at a lower rotational speed than the core shaft; and
a connector system according to any one of the preceding claims.

13. The gas turbine engine according to claim 12, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
